# EUROPÄISCHE PATENTSCHRIFT

(11) **EP 0 479 819 B1**
(45) Veröffentlichungstag und Bekanntmachung des Hinweises auf die Patenterteilung: **20.03.1996**
(21) Anmeldenummer: 90909139.9
(22) Anmeldetag: 11.06.1990
(51) Int. Cl.: C09D 7/02, C09D 167/08

(54) **VERWENDUNG VON PARTIALESTERN VON OLIGOGLYCERINEN MIT FETTSÄUREN ALS PIGMENTDISPERGATOREN FÜR WÄSSRIGE LACKDISPERSIONEN**
USE OF PARTIAL ESTERS OF OLIGOGLYCERINS AND FATTY ACIDS AS PIGMENT DISPERSERS FOR AQUEOUS LACQUER SUSPENSIONS
UTILISATION D'ESTERS PARTIELS D'OLIGOGLYCERINES AVEC DES ACIDES GRAS EN TANT QU'AGENTS DISPERSANTS DE PIGMENTS DANS DES DISPERSIONS AQUEUSES DE LAQUAGE

(30) Priorität: 20.06.1989 DE 3920130
(43) Veröffentlichungstag der Anmeldung: 15.04.1992
(73) Patentinhaber: Henkel Kommanditgesellschaft auf Aktien, D-40191 Düsseldorf (DE)
(72) Erfinder: BUNTE, Reinhard, D-4047 Dormagen 11 (DE); GRESS, Wolfgang, D-5600 Wuppertal 1 (DE); NAGORNY, Ulrich, D-4010 Hilden (DE); GORZINSKI, Manfred, D-4000 Düsseldorf 1 (DE)
(86) Internationale Anmeldenummer: EP9000913
(87) Internationale Veröffentlichungsnummer: WO9015847

(56) Entgegenhaltungen:
- DE-A- 2 511 807
- DE-B- 1 237 716
- Database WPIL, Nr. 89-183961, Derwent Publications, Limited, (London, GB); & JP-A-1123737 (Nippon Carbide Kogy) 16. Mai 1989

## Beschreibung

Die Erfindung betrifft die Verwendung von gegebenenfalls ethoxylierten und/oder propoxylierten Partialestern von durch Kondensation von 2 bis 20 Glycerinmolekülen erhältlichen Oligoglycerinen mit gegebenenfalls hydroxysubstituierten C₂-bis C₁₈-Fettsäuren als Pigmentdispergatoren für wässrige Lackdispersionen.

Partialester von durch Kondensation von 2 bis 20 Glycerinmolekülen erhältlichen Oligoglycerinen mit Fettsäuren sind bekannt, vgl. Fette, Seifen, Anstrichmittel, Jahrgang 88, Seite 101 bis 106 (1986); DE-C 25 11 807. Diese Partialester werden häufig als innere Gleitmittel und/oder antistatische Zusätze für Kunststoffe eingesetzt.

Als Pigmentdispergatoren für wässrige Lackdispersionen werden häufig anionische Dispergatoren eingesetzt; weiterhin auch nicht-ionische Dispergatoren vom Typ der Anlagerungsprodukte von Ethylenoxid und/oder Propylenoxid an Verbindungen mit aktiven H-Atomen, vgl. H. Kittel (Hrsg.), Lehrbuch der Lacke und Beschichtungen, Bd. III, S. 250 bis 258, Verlag W.A. Colomb, Berlin (1976), oder niedermolekulare Poly-acrylsäuresalze, vgl. DE-A 3 318 595.

Der Einsatz der vorbekannten Dispergatoren in wässrigen Lackdispersionen ist jedoch mit verschiedenen Nachteilen behaftet; insbesondere kommt es zu einer vermehrten und unerwünschten Schaumbildung in den wässrigen Lackdispersionen.

Die Erfindung beruht auf der Erkenntnis, daß die eingangs genannten, gegebenenfalls ethoxylierten und/oder propoxylierten Partialester von durch Kondensation von 2 bis 20 Glycerinmolekülen erhältlichen Oligoglycerinen mit gegebenenfalls hydroxysubstituierten C₂- bis C₁₈-Fettsäuren keinen oder einen nur geringen Einfluß auf das Schaumverhalten der wässrigen Lackdispersionen aufweisen. Darüberhinaus verbessern die Partialester die Lagerstabilität der wässrigen Lackzubereitungen und beeinflussen das Viskositätsverhalten derselben nur wenig. Schließlich weisen die Partialester eine ausgezeichnete Netzwirkung auf, welche sich durch hohe Glanzgrade der getrockneten Lackfilme zu erkennen gibt. Schließlich ist im Vergleich zu niedermolekularen Polyacrylsäuresalzen als Pigmentdispergatoren eine Verbesserung der Methylethylketon-Beständigkeit sowie der mechanischen Eigenschaften, insbesondere bei wässrigen Alkydharz-Zubereitungen, feststellbar. Wässrige Lackzubereitungen, insbesondere solche auf Basis von Alkydharzen, zeigen weiterhin im Schwitzwasser- und Salzsprühtest gegenüber entsprechenden Lacken aus dem Stand der Technik beim Test von den Lackdispersionen beschichteten Metallblechen gleichwertige Ergebnisse.

Die erfindungsgemäß einzusetzenden Partialester werden aus durch Kondensation von 2 bis 20 Glycerinmolekülen erhältlichen Oligoglycerinen als Alkoholkomponente hergestellt, wobei Oligoglycerine, die formal aus 3 bis 10, insbesondere aus 4 bis 6 Glycerinmolekülen aufgebaut sind, zur Herstellung der Partialester bevorzugt sind. Es können auch technische Mischungen der Oligoglycerine mit den angegebenen Kettenlängen eingesetzt werden. Für die Herstellung der Partialester eignen sich auch auf anderen Wegen erhältliche Oligoglycerine, vgl. die eingangs erwähnte Literatur gemäß Fette, Seifen, Anstrichmittel (1986).

Die vorstehend genannten Oligoglycerine werden zur Herstellung der erfindungsgemäß einzusetzenden Partialester mit gegebenenfalls hydroxysubstituierten C₂- bis C₁₈-Fettsäuren partiell verestert, wobei es bevorzugt ist, daß die Partialester mindestens eine, insbesondere mindestens zwei freie Hydroxylgruppen im Oligoglycerinteil aufweisen. Bei den hierfür geeigneten Fettsäuren handelt es sich um geradkettige oder verzweigte, insbesondere geradkettige, gesättigte oder ungesättigte Fettsäuren mit 2 bis 18 Kohlenstoffatomen. Typische Beispiele für derartige Fettsäuren sind Essigsäure, Propionsäure, Valeriansäure, Capronsäure, Caprylsäure, Caprinsäure, Laurinsäure, Myristinsäure, Palmitinsäure, Isopalmitinsäure, Stearinsäure, Isostearinsäure, Palmitoleinsäure, Ölsäure, Ricinolsäure, Linolsäure, Linolensäure und 12-Hydroxystearinsäure. Ferner kommen Dihydroxyfettsäuren, wie Dihydroxystearinsäure, hydroxy-alkoxy-substituierte und hydroxy-hydroxyalkoxy-substituierte Fettsäuren in Betracht. Derartige Verbindungen können nach bekannten Verfahren aus epoxidierten Fetten und Ölen durch Ringöffnung mit Wasser oder ein- und mehrwertigen Alkoholen wie z.B. Methanol, Ethanol, Ethylenglykol, Glycerin oder Pentaerythrit und anschließende Verseifung der Glyceride erhalten werden. Bevorzugte Fettsäurekomponenten sind gegebenenfalls hydroxysubstituierte, geradkettige C₁₂- bis C₁₈-Fettsäuren aus der obigen Aufzählung. Wie in der Fettchemie üblich, können die Fettsäuren zur Herstellung der genannten Partialester in Form ihrer technischen Gemische eingesetzt werden.

Die aus den vorgenannten Oligoglycerinen und Fettsäuren erhältlichen Partialester können nach ihrer Herstellung durch Anlagerung von Ethylenoxid und/oder Propylenoxid (in random-oder block-Verteilung der Alkylenoxideinheiten) modifiziert werden. Typischerweise werden 1 bis 30 mol Ethylenoxid pro mol Partialester angelagert. Bei der Anlagerung von Propylenoxid ist auf die Wasserlöslichkeit der so erhaltenen modifizierten Partialester, die mit steigendem Gehalt an Propylenoxidgruppen abnimmt, zu achten. Bei Partialestern höherer Oligoglycerine, z. B. aus 10 oder mehr kondensierten Glycerinmolekülen, können bis zu 30 Propylenoxideinheiten angelagert werden; bei Partialestern aus kürzerkettigen Oligoglycerinen, z. B. aus 3 bis 10 kondensierten Glycerinmolekülen, werden im allgemeinen nicht mehr als 1 bis 3 Propylenoxidgruppen angelagert.

Die erfindungsgemäß einzusetzenden Partialester umfassen auch Produkte, die dadurch erhältlich sind, daß man die als Ausgangsmaterial gewählten Oligoglycerine zunächst mit Ethylenoxid und/oder Propylenoxid zur Reaktion bringt und danach die Veresterung mit den vorgesehenen Fettsäuren durchführt. Die weiter oben stehenden Angaben über Alkylenoxid-modifizierte Partialester gelten hier sinngemäß.

Die erfindungsgemäß zu verwendenden, gegebenenfalls ethoxylierten und/oder propoxylierten Partialester eignen sich als Pigmentdispergatoren für pigmenthaltige, übliche wässrige Lackdispersionen, z. B. auf Basis von wässrigen Dispersionen von dispergierbaren Polymeren wie Acrylaten, Methacrylaten, Polyurethanen, Polyvinylacetat, natürlichen und synthetischen Kautschuken und dergleichen. Sie sind besonders geeignet für Lackdispersionen auf der Basis wässriger Alkydharzdispersionen, die in Ullmann's Encyclopedia of Industrial Chemistry, Vol. Al, Seite 409 bis 423 näher erläutert sind. Besonders bevorzugte wässrige Alkydharzdispersionen enthalten hydroxylgruppenhaltige Alkydharze und sind in der DE-A 3 318 595, auf deren gesamten Inhalt hier Bezug genommen wird, beschrieben.

Gemäß der Erfindung setzt man die gegebenenfalls ethoxylierten und/oder propoxylierten Partialester der eingangs genannten Art in einer Menge von 0,2 bis 100 Gew.-%, insbesondere von 0,2 bis 10 Gew.-%, bezogen auf in den wässrigen Lackzubereitungen vorhandenen Pigmente, ein.

Die Erfindung betrifft weiterhin wässrige Lackdispersionen, insbesondere auf Basis von Alkydharzen, mit einem Gehalt an gegebenenfalls ethoxylierten und/oder propoxylierten Partial-estern wie oben erläutert, als Pigmentdispergatoren.

Die Erfindung wird im folgenden anhand von bevorzugten Ausführungsbeispielen näher erläutert.

### Beispiel 1.

### Herstellung eines weißen Prüflackes.

In einer Rührapparatur wurden die folgenden Komponenten vorgelegt:
- 113,0 Gew.-Teile: demineralisiertes Wasser
- 3,5 Gew.-Teile: Pentaglycerin-monolaurat
- 210,0 Gew.-Teile: Titandioxid
- 1,0 Gew.-Teile: Entschäumer (10%-ige wässrige Lösung eines handelsüblichen ethoxylierten Polysiloxans).

Unter intensivem Rühren wurden die folgenden Komponenten hinzugegeben:
- 295,0 Gew.-Teile: wässrige Alkydharz-Zubereitung nach DE-A 3 318 595, Beispiel x;
- 4,0 Gew.-Teile: Dimethylethanolamin (Neutralisationsmittel für das Alkydharz)
- 319,9 Gew.-Teile: demineralisiertes Wasser
- 83,6 Gew.-Teile: Hexamethoxymethylmelamin (Härtungshilfsmittel)

### Beispiel 2.

Das Beispiel 1 wurde wiederholt, wobei anstelle des dort eingesetzten Pentaglycerin-monolaurats die gleiche Menge Pentaglycerindioleat als Pigmentdispergator verwendet wurde.

### Beispiel 3.

Herstellung eines schwarzen Prüflacks. In der in Beispiel 1 beschriebenen Weise wurden die folgenden Komponenten vermischt:
- 50,0 Gew.-Teile: demineralisiertes Wasser
- 1,8 Gew.-Teile: Dimethylethanolamin
- 10,7 Gew.-Teile: Hexamethoxymethylmelamin
- 40,0 Gew.-Teile: Ruß
- 4,5 Gew.-Teile: hochdisperses Siliziumdioxid
- 45,0 Gew.-Teile: Bariumsulfat
- 3,5 Gew.-Teile: Pentaglycerindioleat.
-

Hierzu wurden die folgenden Komponenten gegeben:
- 321,1 Gew.-Teile: wässrige Alkydharz-Zubereitung nach DE-A 3 318 595, Beispiel 3
- 4,0 Gew.-Teile: Dimethylethanolamin
- 407,0 Gew.-Teile: demineralisiertes Wasser
- 106,4 Gew.-Teile: Hexamethoxymethylmelamin.
- 2,0 Gew.-Teile: Entschäumer (10 %-ige wäßrige Lösung eines handelsüblichen ethoxylierten Polysiloxans)

### Beispiel 4.

Das Beispiel 3 wurde wiederholt, wobei anstelle des dort verwendeten Pentaglycerin-monolaurats Pentaglycerin-dioleat als Pigmentdispergator eingesetzt wurde.

### Vergleichsbeispiele.

Es wurden wässrige Lackdispersionen gemäß den Beispielen 1 bis 4 hergestellt, wobei anstelle des dort verwendeten Pentaglycerin-monooleats bzw. Pentaglycerin-dioleats jeweils gleiche Mengen, bezogen auf den Wikstoffgehalt, einer handelsüblichen nicht-ionogenen Dispergatorzubereitung, (Anlagerungsprodukt von ca. 10 Mol Ethylenoxid an Nonylphenol; Disponil^{R} 286, Fa. Henkel), eines anionischen Dispergators (Additol^{R} XL 250; Fa. Hoechst) und eines Polyacrylsäuresalzes gemäß DE-A 3 318 595, Beispiel 3 verwendet wurden.

Die vorstehend erhaltenen Lacke wurden auf Stahlbleche gespritzt und 15 min bei 160° C eingebrannt. Die Trockenfilmdicken betrugen 25 bis 40 Mikrometer. Die erhaltenen Prüfergebnisse der Lackbeschichtungen sind in Tabelle 1 und 2 zusammengefaßt. In die Tabellen wurden auch die Prüfergebnisse mit den Rezepturen gemäß den Vergleichsversuchen aufgenommen.

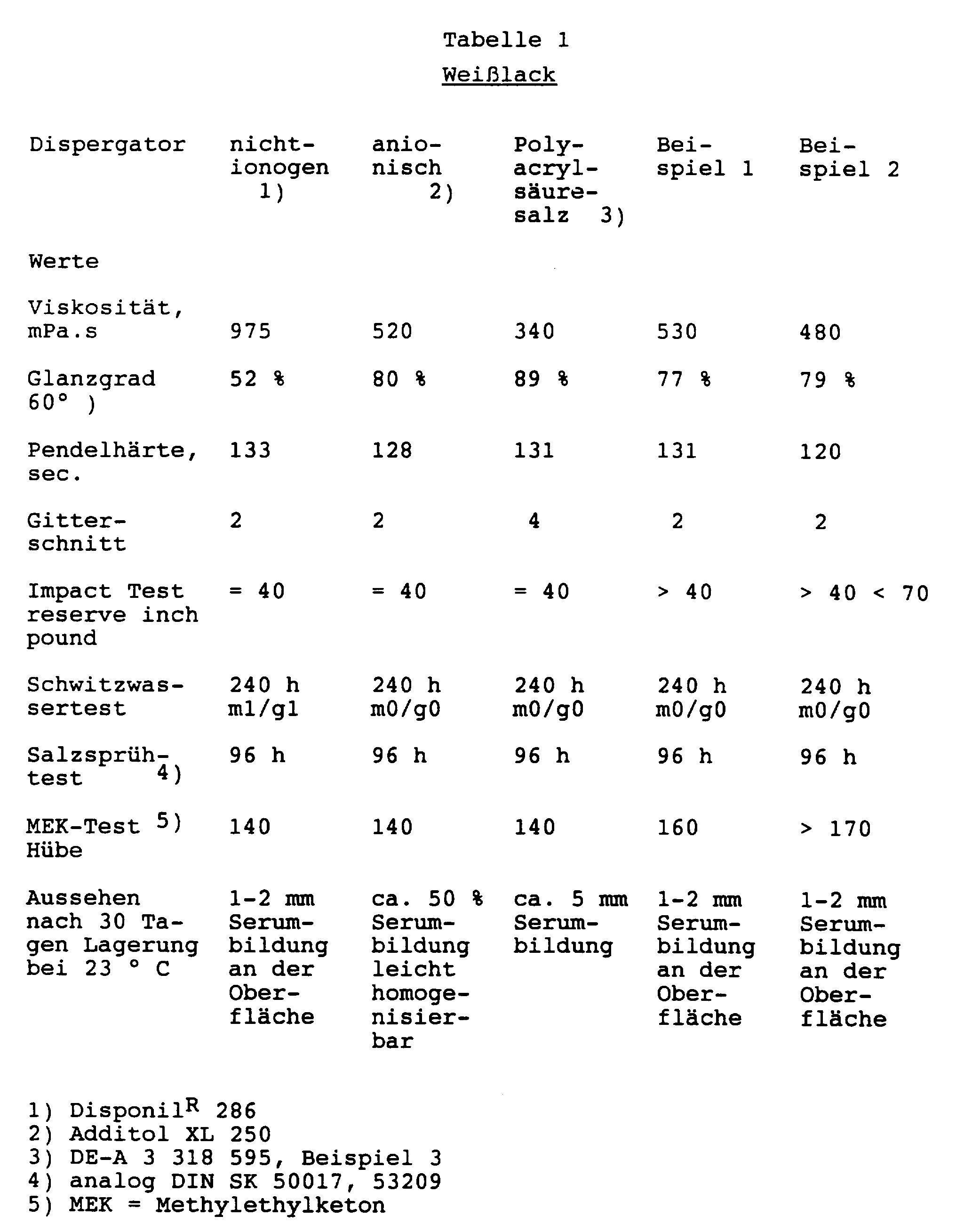

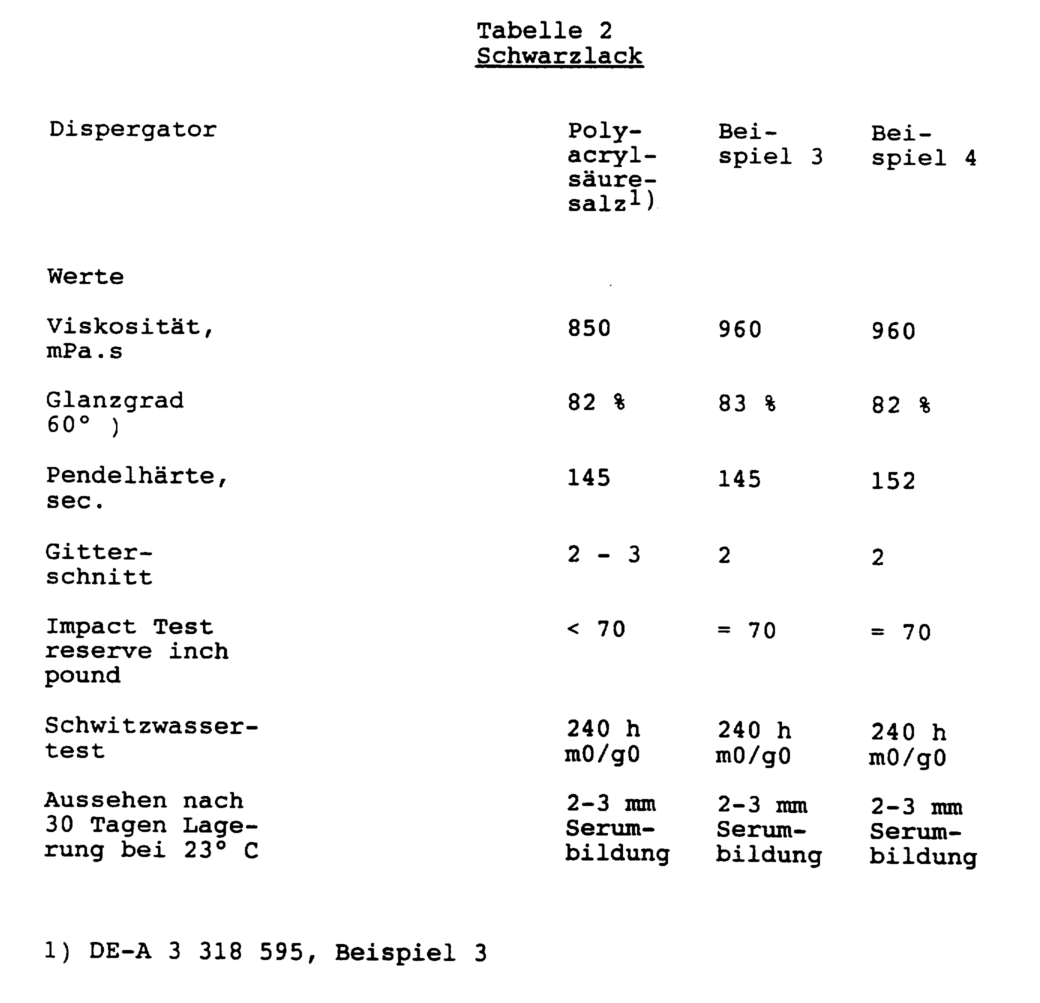

## Patentansprüche

1. Verwendung von gegebenenfalls ethoxylierten und/oder propoxylierten Partialestern von durch Kondensation von 2 bis 20 Glycerinmolekülen erhältlichen Oligoglycerinen mit gegebenenfalls hydroxysubstituierten C₂- bis C₁₈-Fettsäuren als Pigmentdispergatoren für wäßrige Lackdispersionen in einer Menge von 0,2 bis 100 Gew.-% - bezogen auf in den wäßrigen Lackzubereitungen vorhandenen Pigmenten.

2. Verwendung nach Anspruch 1, dadurch gekennzeichnet, daß die Partialester mindestens eine, insbesondere mindestens zwei freie Hydroxylgruppen im Oligoglycerinteil aufweisen.

3. Verwendung nach Anspruch 1 oder 2, dadurch gekennzeichnet, daß die Partialester aus durch Kondensation von 3 bis 10, insbesondere 4 bis 6 Glycerinmolekülen erhältlichen Oligoglycerinen und gegebenenfalls hydroxysubstituierten, geradkettigen C₁₂- bis C₁₈-Fettsäuren gebildet sind.

4. Verwendung nach mindestens einem der Ansprüche 1 bis 3, dadurch gekennzeichnet, daß die Lackdispersionen wässrige Alkydharzdispersionen, insbesondere wässrige Dispersionen hydroxylgruppenhaltiger Alkydharze, sind.

5. Verwendung nach den Ansprüchen 1 bis 4, **dadurch gekennzeichnet**, daß man die gegebenenfalls ethoxylierten und/oder propoxylierter Partialester in einer Menge von 0,2 bis 10 Gew.-% - bezogen auf in den wäßrigen Lackzubereitungen vorhandenen Pigmenten - einsetzt.

6. Wäßrige Lackdispersionen, insbesondere auf Basis von Alkydharzen, mit einem Gehalt an gegebenenfalls ethoxylierten und/ oder propoxylierten Partialestern von durch Kondensation von 2 bis 20 Glycerinmolekülen erhältlichen Oligoglycerinen mit gegebenenfalls hydroxysubstituierten C₂- bis C₁₈-Fettsäuren wie in Anspruch 1 beschrieben, als Pigmentdispergatoren.

## Claims

1. The use of optionally ethoxylated and/or propoxylated partial esters of oligoglycerols obtainable by condensation of 2 to 20 glycerol molecules with optionally hydroxy-substituted C₂₋₁₈ fatty acids as pigment dispersants for water-based lacquer dispersions in a quantity of 0.2 to 100% by weight, based on the pigments present in the water-based lacquer formulations.

2. The use claimed in claim 1, characterized in that the partial esters contain at least one and, more particularly, at least two free hydroxyl groups in the oligoglycerol part.

3. The use claimed in claim 1 or 2, characterized in that the partial esters are formed from oligoglycerols obtainable by condensation of 3 to 10 and, more particularly, 4 to 6 glycerol molecules and optionally hydroxy-substituted, linear C₁₂₋₁₈ fatty acids.

4. The use claimed in at least one of claims 1 to 3, characterized in that the lacquer dispersions are water-based alkyd resin dispersions, more particularly water-based dispersions of hydroxyl-functional alkyd resins.

5. The use claimed in at least one of claims 1 to 4, characterized in that the optionally ethoxylated and/or propoxylated partial esters are used in a quantity of 0.2 to 10% by weight, based on pigments present in the water-based lacquer preparations.

6. Water-based lacquer dispersions, more particularly based on alkyd resins, containing optionally ethoxylated and/or propoxylated partial esters of oligoglycerols obtainable by condensation of 2 to 20 glycerol molecules with optionally hydroxy-substituted C₂₋₁₈ fatty acids according to claim 1 as pigment dispersants.

## Revendications

1. Utilisation d'esters partiels éventuellement éthoxylés et/ou propoxylés d'oligoglycérols accessibles par condensation de 2 à 20 molécules de glycérol, avec des acides gras en C₂ à C₁₈, le cas échéant substitués par un hydroxy, en tant qu'agents dispersants pour des dispersions aqueuses de laque, en une quantité allant de 0,2 à 100 % en poids, rapportée aux pigments présents dans les préparations aqueuses de laque.

2. Utilisation selon la revendication 1, caractérisée en ce que les esters partiels possèdent au moins un, en particulier au moins deux groupes hydroxyle libres dans la fraction oligoglycérol.

3. Utilisation selon la revendication 1 ou 2, caractérisée en ce que les esters partiels sont formés d'oligoglycérols accessibles par condensation de 3 à 10, en particulier de 4 à 6, molécules de glycérol et d'acides gras en C₂ à C₁₈ à chaîne droite, substitués par un hydroxyle le cas échéant.

4. Utilisation selon au moins une des revendications 1 à 3, caractérisée en ce que les dispersions de laque sont des dispersions aqueuses de résine alkyde, en particulier des dispersions aqueuses de résines alkyde renfermant des groupes hydroxyle.

5. Utilisation selon les revendications 1 à 4, caractérisée en ce que l'on met en oeuvre les esters partiels, éventuellement éthoxylés et/ou propoxylés, en une quantité allant de 0,2 à 10 % en poids, rapportée aux pigments présents dans les préparations aqueuses de laque.

6. Dispersions aqueuses de laque, en particulier à base de résines alkyde, ayant une teneur en esters partiels éthoxylés et/ou propoxylés d'oligoglycérols, accessibles par condensation de 2 à 20 molécules de glycérol avec des acides gras en C₂ à C₁₈ éventuellement substitués par un hydroxyle, comme décrit à la revendication 1, en tant qu'agents dispersants de pigment.
